# EUROPÄISCHE PATENTSCHRIFT

(11) **EP 3 001 038 B1**
(45) Veröffentlichungstag und Bekanntmachung des Hinweises auf die Patenterteilung: **28.06.2017**
(21) Anmeldenummer: 15175568.3
(22) Anmeldetag: 07.07.2015
(51) Int. Cl.: F04D 17/16, F04D 29/28, A01F 12/44, F04D 29/66

(54) **RADIALMASCHINE**
RADIAL MACHINE
MACHINE RADIALE

(30) Priorität: 26.09.2014 DE 102014114031; 09.02.2015 DE 102015101824
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Bölling, Ralf, 33803 Steihagen-Brockhagen (DE); Claes, Ulrich, 33790 Halle/Westf. (DE)

(56) Entgegenhaltungen:
- EP-A1- 0 270 723
- EP-A1- 2 476 304
- DE-A1- 2 423 917
- GB-A- 537 916

## Beschreibung

Die vorliegende Erfindung betrifft eine Radialmaschine zur Förderung von Fluiden gemäß dem Oberbegriff des Anspruches 1. Weiterhin betrifft die Erfindung eine Reinigungseinrichtung für einen Mähdrescher gemäß dem Anspruch 11 sowie einen Mähdrescher gemäß dem Anspruch 12.

Aus der DE 24 23 917 A1 ist eine Anordnung von Radialmaschinen zur Förderung von Fluiden in Form einer Gebläseanordnung für eine Reinigungseinrichtung eines Mähdreschers bekannt. Diese Gebläseanordnung besteht aus mehreren auf einer Antriebswelle angeordneten Radialmaschinen, bei welchen die Läufer der Radialmaschinen beidseitig einer auf einer die Antriebswelle umgebenden Mantelfläche mittig angeordneten Wandung Läuferschaufeln aufweisen. Die Läufer der Radialmaschinen sind von einem Gehäuse umschlossen. Die Gehäuse lenken durch einen nachgeordneten Gebläsekanal den von den Radialmaschinen abgegebenen Fluidstrom, hier einen Luftstrom, auf Siebe der Reinigungseinrichtung des Mähdreschers, um eine Trennung von Korn und leichteren Nichtkornbestandteilen zu erreichen.

Als nachteilig an einer derartigen Radialmaschine hat es sich gezeigt, dass innerhalb der Gehäuse auf Grund fehlender, die Gehäuse der Radialmaschinen seitlich verschließender Deckscheiben, welche zur Gewährleistung eines verstopfungsfreien Betriebes nicht eingesetzt werden, Sekundärströmungen auftreten. Diese Sekundärströmungen strömen ausgehend von der mittig angeordneten Wandung zurück zum Ansaugbereich der Radialmaschine. Die Überlagerung der Sekundärströmungen und der Primärströmung führt zu einem Drall in dem Gehäuse der Radialmaschine sowie in dem sich anschließenden Gebläsekanal, der den Luftstrom Sieben der Reinigung zuführt. Der Drall beeinflusst das weitere Strömungsverhalten des aus den Radialmaschinen austretenden Fluidstroms bis in den Bereich der Siebe der Reinigungseinrichtung hinein. Hier führt der Drall zu einer ungleichmäßigen Strömungsverteilung quer zu den Sieben der Reinigungseinrichtung.

Der Erfindung liegt daher die Aufgabe zu Grunde, eine Radialmaschine zur Förderung von Fluiden der eingangs genannten Art derart weiterzuentwickeln, dass die Drallbildung zumindest reduziert oder derart beeinflusst wird, dass die Auswirkungen auf nachfolgende Prozesse geringer sind. Weiterhin liegt der Erfindung die Aufgabe zu Grunde, eine Reinigungseinrichtung sowie einen Mähdrescher der eingangs genannten Art derart weiter zu entwickeln, dass diese effizienter arbeiten.

Diese Aufgabe wird hinsichtlich der Radialmaschine durch die kennzeichnenden Merkmale des Anspruches 1 gelöst. Hinsichtlich der Reinigungseinrichtung und des Mähdreschers wird die Aufgabe durch die kennzeichnenden Merkmale der Ansprüche 11 und 12 gelöst.

Vorteilhafte Weiterbildungen sind Gegenstand der Unteransprüche.

Gemäß dem Anspruch 1 wird vorgeschlagen, dass zueinander benachbarte, durch eine Läuferschaufel getrennte Wandsegmente eine in tangentialer Richtung des Laufrades divergierende Anordnung aufweisen. Als eine divergierende Anordnung, im Sinne von einer alternierend voneinander abweichenden Anordnung der Wandsegmente, wird die Anordnung und/oder Erstreckung von in Umfangsrichtung des Laufrades gesehen zueinander benachbarter Wandsegmente angesehen, welche zumindest abschnittsweise von einer in tangentialer Richtung fluchtenden Anordnung der Wandsegmente abweicht. Die divergierende Anordnung der Wandsegmente zwischen den jeweiligen sich achsparallel zu der zumindest einen Antriebswelle erstreckenden Läuferschaufeln führt zu einer Störung der Drallbildung in Folge der Sekundärströmung. Die divergierende Anordnung führt zu einer wechselnden Ausbildung hinsichtlich Volumen und/oder Geometrie der sich zwischen zwei Läuferschaufeln ausbildenden Kammern, wodurch ein erhöhtes Störpotential bei der Drallbildung erreicht wird, das heißt eine Reduzierung der Drallbildung. Die Gleichmäßigkeit der primären Luftströmung, die beispielsweise an Siebe einer Reinigungseinrichtung abgegeben wird, wird erhöht. Diese Anordnung der Wandsegmente kann sowohl bei Radialmaschinen mit als auch ohne Deckscheiben zur Anwendung kommen. Die Radialmaschine gemäß dem Anspruch 1 entfaltet unabhängig von dem zu fördernden Fluid, ob gasförmig oder flüssig, seine vorteilhafte Wirkung. Die Radialmaschine kann einflutig oder zweiflutig ausgeführt sein.

In vorteilhafter Weiterbildung der Erfindung wird gemäß dem Anspruch 2 vorgeschlagen, dass zueinander benachbarte Wandsegmente ausgehend von einer gemeinsamen Mittellinie auf der Mantelfläche der Nabe in axialer Richtung und/oder radialer Richtung divergierend angeordnet sein können. Das heißt, dass die Wandsegmente mit ihrem jeweiligen der Mantelfläche zugewandten Ende in Umfangsrichtung fluchtend angeordnet sind, während ihre jeweiligen freien, sich radial nach außen erstreckenden Enden divergieren.

Alternativ kann vorgesehen sein, dass zueinander benachbart angeordnete Wandsegmente axial zur Mittellinie versetzt angeordnet sind. Das jeweilige Wandsegment zwischen zwei Läuferschaufeln ist in axialer Richtung der zumindest einen Antriebswelle zur Mittellinie beabstandet angeordnet. Es kann sich dadurch in Umfangsrichtung eine wechselweise Anordnung der Wandsegmente ergeben, wodurch die Geometrie und/oder das Volumen der einzelnen Kammern variiert werden.

Hierbei können die Wandsegmente sich senkrecht zur Mantelfläche erstreckend auf dieser angeordnet sein. Hierzu kann das jeweilige Wandsegment mit seinem der Mantelfläche zugewandten Ende einen Winkel von 90° einschließen.

Alternativ können die Wandsegmente unter einem Winkel zur Mantelfläche geneigt angeordnet sein. Hierzu kann das jeweilige Wandsegment mit seinem der Mantelfläche zugewandten Ende einen Winkel ungleich 90°einschli eßen.

Vorzugsweise können die Wandelemente in radialer Richtung einen geraden Profilverlauf aufweisen. Es kann sich dabei um ebene, plattenförmig ausgebildete Wandsegmente handeln.

Des Weiteren können die Wandsegmente entlang ihrer radialen Erstreckung einen gekrümmten Profilverlauf aufweisen. Es kann sich dabei um profilierte Wandsegmente handeln, die in radialer und/oder axialer Richtung eine Krümmung ihrer Oberfläche aufweisen.

Gemäß einer weiteren vorteilhaften Weiterbildung können die eine Neigung in axialer Richtung des Laufrades aufweisen. Das jeweilige, zwischen zwei Läuferschaufeln angeordnete Wandsegment ist unter einem Winkel zur Oberfläche der Läuferschaufeln geneigt angeordnet. Hierzu können die Wandsegmente unter einem gleichen Winkel in Umfangsrichtung des Laufrades angeordnet sein. Dabei können die Wandsegmente derart ausgestaltet sein, dass sich um Übergang von einem Wandsegment zum nächsten keine Unstetigkeitsstellen ausbilden, das heißt sich ein serpentinenähnlicher Verlauf in tangentialer Richtung der Laufrad ergibt. Alternativ können sich im Übergang Unstetigkeitsstellen ausbilden, so dass sich ein zickzackähnlicher Verlauf in tangentialer Richtung des Laufrades einstellt.

Vorzugsweise können sich die Wandsegmente in radialer Richtung zumindest bis zur halben Höhe der Läuferschaufeln erstrecken. Bevorzugt schließen die Wandsegmente mit den Läuferschaufeln ab. Denkbar ist auch, dass sich die Wandsegmente in radialer Richtung über die Läuferschaufeln hinaus erstrecken.

Insbesondere können die Wandsegmente eine entgegen der Krümmung ihres Profilverlaufes geneigte Anordnung aufweisen. Das heißt, dass das jeweilige Wandsegment mit seinem einen Ende in axialer Richtung beabstandet zur Mittelinie der Mantelfläche angeordnet sein kann, jedoch einen in Richtung der Mittellinie geneigten Profilverlauf aufweist.

Des Weiteren betrifft die Erfindung eine Reinigungseinrichtung für einen Mähdrescher, die durch eine Gebläseanordnung gekennzeichnet ist, die zumindest eine auf zumindest einer Antriebswelle angeordnete Radialmaschine nach einem der Ansprüche 1 bis 10 aufweist. Vorteilhaft an dieser Reinigungseinrichtung ist, dass die Beaufschlagung der Siebe mit einem gegenüber dem Stand der Technik vergleichmäßigten Luftstrom zur Trennung von Korn und leichteren Nichtkornbestandteilen durch Windsichtung erfolgen kann, wodurch die Effizienz und Qualität des Reinigungsprozesses verbessert wird.

Darüber hinaus betrifft die Erfindung einen Mähdrescher mit einer Reinigungseinrichtung, gekennzeichnet durch eine Gebläseanordnung nach Anspruch 11 mit zumindest einer Radialmaschine nach einem der Ansprüche 1 bis 10.

Die vorliegende Erfindung wird nachstehend anhand von in den Zeichnungen dargestellten Ausführungsbeispielen näher erläutert.

Es zeigen:
- Fig. 1: eine schematische Längsschnittansicht eines Mähdreschers;
- Fig. 2: eine schematische Ansicht einer Radialmaschine;
- Fig. 3: eine Teilansicht einer Läuferschaufel mit Wandsegmenten gemäß einer zweiten Ausführungsform;
- Fig. 4: eine Teilansicht einer Läuferschaufel mit Wandsegmenten gemäß einer dritten Ausführungsform;
- Fig. 5: eine Teilansicht einer Läuferschaufel mit Wandsegmenten gemäß einer vierten Ausführungsform;
- Fig. 6: eine Teilansicht einer Läuferschaufel mit Wandsegmenten gemäß einer fünften Ausführungsform;
- Fig. 7: eine Teilansicht einer Läuferschaufel mit Wandsegmenten gemäß einer sechsten Ausführungsform;

Eine erfindungsgemäße Radialmaschine zur Förderung von Fluiden wird beispielhaft anhand eines Mähdrescher 1 erläutert. Andere, außerhalb der Erntetechnik liegende Anwendungsbereiche einer erfindungsgemäß ausgeführten Radialmaschine sind denkbar.

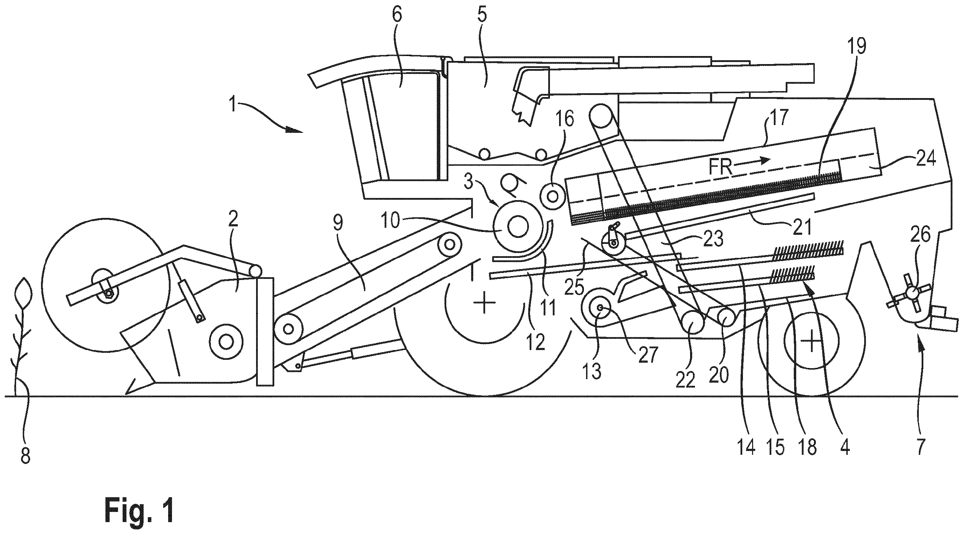

Die Darstellung in Fig. 1 zeigt eine Längsschnittdarstellung eines Mähdrescher 1. Der Mähdrescher 1 trägt in seinem Frontbereich ein höhenverstellbares Schneidwerk 2, welches gewachsenes Erntegut 8 auf großer Breite aberntet, in seitlicher Richtung zusammenführt und an ein Schrägförderorgan 9 übergibt. Durch das Schrägförderorgan 9 gelangt das Erntegut 8 in an sich bekannter Weise zu Dreschorganen 3, die in der Darstellung der Fig. 1 eine Dreschtrommel 10, eine dieser nachgeordnete Wendetrommel 16 und einen Dreschkorb 11 umfassen. Durch Öffnungen des Dreschkorbs 11 hindurch wird aus dem Erntegut 8 ein erster, im Wesentlichen aus einem Gemisch aus Körnern, Kurzstroh und Spreu bestehender Erntegutstrom abgeschieden, der auf einen Vorbereitungsboden 12 fällt. Durch Schwingbewegungen des oszillierend angetriebenen Vorbereitungsbodens 12 wird der Erntegutstrom darauf nach hinten in Richtung einer Reinigungseinrichtung 4 gefördert.

Der nicht durch den Dreschkorb 11 hindurch getretene Teil des Erntegutstroms wird über die Wendetrommel 16 zu einer als Axialrotor 17 ausgeführten Abscheidevorrichtung weiterbefördert. Der Axialrotor 17 erstreckt sich in Längsrichtung des Mähdreschers 1. Die Abscheidevorrichtung kann auch als so genannter Hordenschüttler ausgeführt sein. Der Axialrotor 17 ist in seinem unteren Bereich von einem halbzylindrischen Abscheidekorb 19 umgeben, durch das ein zweiter, im Wesentlichen aus einem Gemisch aus Körnern und Ährenbruchstücken bestehender Erntegutstrom abgeschieden wird, der auf einen Rücklaufboden 21 gelangt. Anstelle eines einzelnen Axialrotors 17 könnten auch zwei Axialrotoren parallel nebeneinander vorgesehen sein. Erntegut, im Wesentlichen Stroh, welches am rückwärtigen Ende 24 des Axialrotors 17 ausgebracht wird, gelangt zu einem Verteiler 7 am Heck des Mähdreschers 1, wo es von einem Häcksler 26 zerkleinert und schließlich auf den Boden eines Feldes ausgebracht wird.

Auf dem schwingend bewegten Rücklaufboden 21 wird der zweite Erntegutstrom vorwärts gefördert an die Reinigungseinrichtung 4 übergeben, wo er sich mit dem durch den Dreschkorb 11 hindurch getretenen ersten Erntegutstrom vereinigt, der von dem Vorbereitungsboden 12 an die Reinigungseinrichtung 4 abgegeben wird.

Die Reinigungseinrichtung 4 umfasst ein Obersieb 14, ein Untersieb 15 und eine Gebläseanordnung 13, welches einen über die Siebe 14, 15 streichenden Luftstrom erzeugt. Das in den vom Vorbereitungsboden 12 beziehungsweise Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im Rücken der Fahrerkabine 6 angeordneten Korntank 5 fördert.

Anteile des Erntegutstroms, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom der Gebläseanordnung 13 erfasst und aus der Maschine ausgetragen. Schwere, gröbere Anteile des Erntegutstromes gelangen über eine Überkehr am rückwärtigen Ende der Siebe 14, 15 in einen unterhalb der Siebe 14, 15 quer verlaufende Mulde. Eine in der Mulde rotierende Schnecke 20 räumt das Material seitwärts zu einem Überkehrelevator 25, der es zurück zu den Dreschorganen 3 befördert.

Die Gebläseanordnung 13 umfasst zumindest eine Antriebswelle 27, auf der zumindest eine Radialmaschine 28 angeordnet ist. Insbesondere können mehrere Radialmaschinen nebeneinander auf der Antriebswelle 27 angeordnet sein.

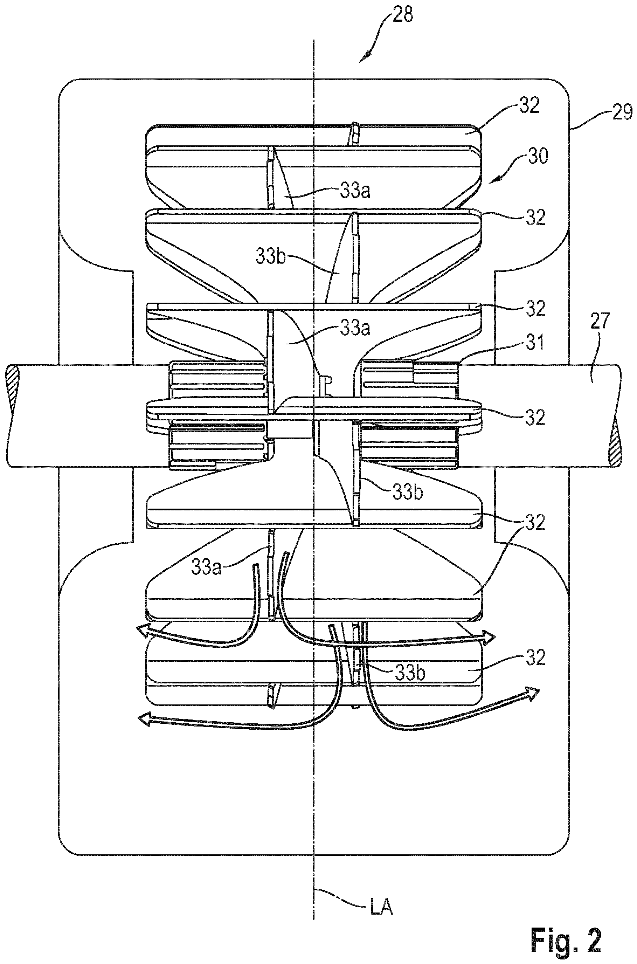

In Fig. 2 ist eine einzelne Radialmaschine 28 beispielhaft dargestellt. Die zweiflutig ausgeführte Radialmaschine 28 umfasst ein Gehäuse 29, in welchem ein Laufrad 30 auf der zumindest einen Antriebswelle 27 angeordnet ist. Das Gehäuse 29 weist zumindest eine Ansaugöffnung sowie eine oder mehrere Austrittsöffnungen zur Abgabe des verdichteten Luftstromes an die Reinigungseinrichtung 4 auf. Das Laufrad 30 umfasst eine hohlzylindrische Nabe 31, mit welcher diese auf der Antriebswelle 27 befestigt ist.

Auf der Mantelfläche der Nabe 31 sind gleichmäßig über den Umfang verteilt Läuferschaufeln 32 angeordnet, die der Erzeugung einer in Umfangsrichtung gerichteten Luftströmung dienen. Zwischen den jeweiligen Läuferschaufeln 32 sind wechselweise Wandsegmente 33a, 33b in tangentialer Richtung des Laufrades 30 angeordnet. Die Wandsegmente 33a, 33b erstrecken sich in radialer Richtung zwischen den Läuferschaufeln 32. Die Wandsegmente 33a, 33b können hinsichtlich ihrer Anordnung auf der Mantelfläche der Nabe 31 und ihrer Gestalt variieren, wie in den Abbildungen gemäß den Fig. 2 bis Fig. 7 beispielhaft veranschaulicht ist.

In dem in Fig. 2 dargestellten Ausführungsbeispiel sind die Wandsegmente 33a, 33b mit ihren der Nabe 31 zugewandten Enden im Bereich einer mit dem Bezugszeichen LA versehenen Längsachse des Laufrades 30 angeordnet. Die Wandsegmente 33a, 33b sind plattenförmig ausgeführt und weisen entlang ihrer radialen Erstreckung einen geraden Profilverlauf auf. Ausgehend von der Mantelfläche der Nabe 31 weisen die Wandsegmente 33a zu den ihnen jeweils benachbart angeordneten Wandsegmenten 33b eine in axialer Richtung der Läuferschaufeln 32 divergierende Anordnung auf. Diese divergierende Anordnung wird in dem dargestellten Ausführungsbeispiel durch eine Neigung der Wandsegmente 33a, 33b in axialer Richtung um einen Winkel zur Mantelfläche der Nabe 31 erreicht. Dabei sind die Wandsegmente 33a gegenüber den Wandsegmenten 33b in entgegengesetzter Richtung geneigt angeordnet. Hierzu können die Wandsegmente 33a, 33b an einer gedachten Umfangslinie LA gespiegelt angeordnet sein, wodurch eine Symmetrie erreicht wird. Die gedachte Umfangslinie LA kann dabei mit der Mitte der Nabe 31 zusammenfallen beziehungsweise zur Mitte der Nabe 31 in axialer Richtung zu dieser versetzt vorgesehen sein.

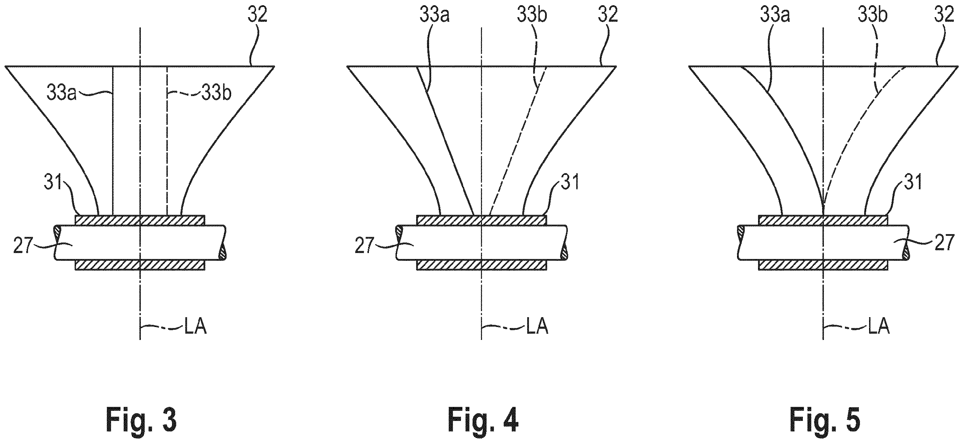

Eine zweite Ausführungsform der Gebläseanordnung 13 sieht vor, dass die Wandsegmente 33a und 33b zur gedachten Umfangslinie LA parallel versetzt angeordnet sind, wie in Fig. 3 dargestellt ist. Die Darstellung in Fig. 3 zeigt lediglich eine Läuferschaufel 32 sowie jeweils ein von und hinter dieser angeordnetes Wandsegment 33a, 33b. Das jeweilige, der Nabe 31 zugewandte Ende der Wandsegmente 33a, 33b ist beabstandet zu der gedachten Umfangslinie LA auf der Mantelfläche der Nabe 31 angeordnet. Bei dieser Ausführungsform können sich die Wandsegmente 33am 33b senkrecht zur Mantelfläche der Nabe 31 in radialer Richtung nach außen erstrecken, wie in Fig. 3 veranschaulicht, oder, wie in dem in Fig. 4 dargestellten Ausführungsbeispiel, eine Neigung in axialer Richtung aufweisen, so dass das der Mantelfläche der Nabe 31 abgewandte Ende des jeweiligen Wandsegmentes 33a, 33b zur gedachten Umfangslinie LA beabstandet ist. Auch diese Wandsegmente 33a, 33b weisen entlang ihrer radialen Erstreckung einen geraden Profilverlauf auf. Die Beabstandung des jeweiligen Wandsegmentes 33a, 33b zur gedachten Umfangslinie LA kann symmetrisch mit einem jeweils gleichen Abstand zur gedachten Umfangslinie LA vorgesehen sein oder asymmetrisch, mit variierendem Abstand zur gedachten Umfangslinie LA. Dabei kann der Abstand des jeweiligen der Nabe 31 zugewandten Endes der Wandsegmentes 33a, 33b zur gedachten Umfangslinie LA gegen Null tendieren.

Eine weitere Ausführungsform der Gebläseanordnung 13 sieht eine Anordnung der Wandsegmente 33a, 33b vor, bei welcher diese auf Grund eines entlang ihrer radialen Erstreckung gekrümmten Profilverlaufes eine bezüglich der gedachten Umfangslinie LA des Laufrades 30 divergierende Anordnung aufweisen. Hierbei kann zwischen mehreren Varianten unterschieden werden. Gemäß einer ersten Variante, die in Fig. 5 dargestellt ist, können die einen gekrümmten Profilverlauf aufweisenden Wandelemente 33a, 33b mit ihrem der Mantelfläche der Nabe 31 zugewandten Ende jeweils entlang der gedachten Umfangslinie LA des Laufrades 30 angeordnet sein. Die Divergenz resultiert aus dem gekrümmten Profilverlauf. Hierzu können die Wandelemente 33a, 33b mit ihrer jeweils sich in Umfangsrichtung der Mantelfläche der Nabe 31 erstreckenden konkaven Außenseite voneinander abgewandt angeordnet sein.

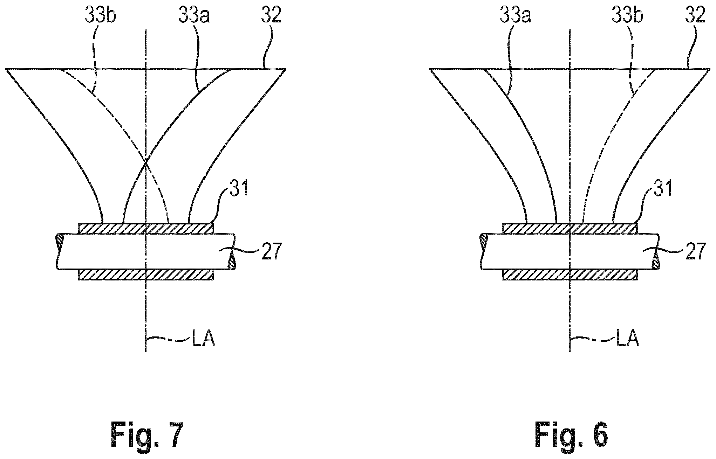

Eine alternative Anordnung von Wandelementen 33a, 33b mit einem gekrümmten Profilverlauf gemäß Fig. 5 kann darin bestehen, dass diese zusätzlich von der gedachten Umfangslinie LA in axialer Richtung beabstandet auf der Mantelfläche der Nabe 31 angeordnet sind, wie in Fig. 6 veranschaulicht ist.

Eine weitere Variante ist in Fig. 7 veranschaulicht, wonach die einen gekrümmten Profilverlauf aufweisenden Wandsegmente 33a, 33b mit ihrem der Mantelfläche der Nabe 31 zugewandte Ende der Wandsegmente 33a, 33b beabstandet zu der Längsachse LA auf der Mantelfläche der Nabe 31 angeordnet sind, wobei jedoch die sich in tangentialer Richtung der Mantelfläche der Nabe 31 erstreckenden konkaven Außenseite der Wandsegmente 33a, 33b einander zugewandt sind.

**Bezugszeichenliste**

| | | | |
|---|---|---|---|
| **1** | **Mähdrescher** | **31** | **Nabe** |
| **2** | **Schneidwerk** | **32** | **Läuferschaufel** |
| **3** | **Dreschorgane** | **33a** | **Wandsegment** |
| **4** | **Reinigungseinrichtung** | **33b** | **Wandsegment** |
| **5** | **Korntank** | | |
| **6** | **Fahrerkabine** | **LA** | **Umfangslinie** |
| **7** | **Verteiler** | | |
| **8** | **Erntegut** | | |
| **9** | **Schrägförderer** | | |
| **10** | **Dreschtrommel** | | |
| **11** | **Dreschkorb** | | |
| **12** | **Vorbereitungsboden** | | |
| **13** | **Gebläseanordnung** | | |
| **14** | **Sieb** | | |
| **15** | **Sieb** | | |
| **16** | **Wendetrommel** | | |
| **17** | **Axialrotor** | | |
| **18** | **Boden** | | |
| **19** | **Abscheidekorb** | | |
| **20** | **Schnecke** | | |
| **21** | **Rücklaufboden** | | |
| **22** | **Schneckenfördereinrichtung** | | |
| **23** | **Kornelevator** | | |
| **24** | **Rückwärtiges Ende** | | |
| **25** | **Überkehrelevator** | | |
| **26** | **Häcksler** | | |
| **27** | **Antriebswelle** | | |
| **28** | **Radialmaschine** | | |
| **29** | **Gehäuse** | | |
| **30** | **Laufrad** | | |

## Patentansprüche

1. Radialmaschine (28), mit einem Gehäuse (29), in welchem ein Laufrad (30) auf einer Antriebswelle (27) angeordnet ist, welche von einer hohlzylindrischen Nabe (31) abschnittsweise umgeben ist, auf welcher in Umfangsrichtung verteilt sich achsparallel zu der Antriebswelle (27) erstreckende Läuferschaufeln (32) angeordnet sind, welche durch sich radial nach außen erstreckende Wandsegmente (33a, 33b), die in Umfangsrichtung des Laufrades (30) zwischen den Läuferschaufeln (32) stehend angeordnet sind, miteinander verbunden sind, **dadurch gekennzeichnet, dass** zueinander benachbarte, durch eine Läuferschaufel (32) getrennte Wandsegmente (33a, 33b) eine in tangentialer Richtung des Laufrades (30) divergierende Anordnung aufweisen.

2. Radialmaschine (28) nach Anspruch 1, **dadurch gekennzeichnet, dass** zueinander benachbarte Wandsegmente (33a, 33b) ausgehend von einer gemeinsamen Umfangslinie (LA) auf der Mantelfläche der Nabe (31) in axialer Richtung und/oder radialer Richtung divergierend angeordnet sind.

3. Radialmaschine (28)nach Anspruch 2, **dadurch gekennzeichnet, dass** zueinander benachbarte Wandelemente (33a, 33b) axial zur Umfangslinie versetzt angeordnet sind.

4. Radialmaschine (28) nach einem der Ansprüche 2 oder 3, **dadurch gekennzeichnet, dass** die Wandsegmente (33a, 33b) sich radial nach außen erstreckend auf der Mantelfläche der Nabe (31) angeordnet sind.

5. Radialmaschine (28) nach einem der Ansprüche 2 oder 3, **dadurch gekennzeichnet, dass** die Wandsegmente (33a, 33b) unter einem Winkel zur Mantelfläche der Nabe (31) geneigt angeordnet sind.

6. Radialmaschine (28) nach einem der Ansprüche 1 bis 5, **dadurch gekennzeichnet, dass** die Wandsegmente (33a, 33b) in radialer Richtung einen geraden Profilverlauf aufweisen.

7. Radialmaschine (28) nach einem der Ansprüche 1 bis 5, **dadurch gekennzeichnet, dass** die Wandsegmente (33a. 33b) entlang ihrer radialen Erstreckung einen gekrümmten Profilverlauf aufweisen.

8. Radialmaschine (28) nach einem der Ansprüche 1 bis 7, **dadurch gekennzeichnet, dass** die Wandsegmente bezüglich der Umfangslinie (LA) eine Neigung aufweisen.

9. Radialmaschine (28) nach einem der Ansprüche 1 bis 8, **dadurch gekennzeichnet, dass** sich die Wandsegmente (33a, 33b) in radialer Richtung zumindest bis zur halben Höhe der Läuferschaufeln (32) erstrecken.

10. Radialmaschine (28) nach einem der Ansprüche 8 oder 9, **dadurch gekennzeichnet, dass** die Wandsegmente (33a, 33b) eine entgegen der Krümmung ihres Profilverlaufes geneigte Anordnung auf der Mantelfläche der Nabe (31) aufweisen.

11. Reinigungseinrichtung (4) für einen Mähdrescher (1), **gekennzeichnet durch** eine Gebläseanordnung (13), die zumindest eine auf zumindest einer Antriebswelle (27) angeordnete Radialmaschine (28) nach einem der Ansprüche 1 bis 10 aufweist.

12. Mähdrescher (1), **gekennzeichnet durch** eine Reinigungseinrichtung (4) nach Anspruch 11 mit zumindest einer Radialmaschine (28) nach einem der Ansprüche 1 bis 10.

## Claims

1. A radial machine (28) comprising a housing (29) in which an impellor (30) is arranged on a drive shaft (27) which is portion-wise surrounded by a hollow-cylindrical hub (31), on which are arranged rotor blades (32) which extend in axis-parallel relationship with the drive shaft (27) distributed in the peripheral direction and which are connected together by radially outwardly extending wall segments (33a, 33b) which are arranged standing between the rotor blades (32) in the peripheral direction of the impellor (30), **characterised in that** mutually adjacent wall segments (33a, 33b) separated by a rotor blade (32) are in an arrangement which diverges in the tangential direction of the impellor (30).

2. A radial machine (28) according to claim 1 **characterised in that** starting from a common peripheral line (L) mutually adjacent wall segments (33a, 33b) are arranged on the peripheral surface of the hub (31) diverging in the axial direction and/or the radial direction.

3. A radial machine (28) according to claim 2 **characterised in that** mutually adjacent wall elements (33a, 33b) are arranged displaced axially relative to the peripheral line.

4. A radial machine (28) according to one of claims 2 and 3 **characterised in that** the wall segments (33a, 33b) are arranged extending radially outwardly on the peripheral surface of the hub (31).

5. A radial machine (28) according to one of claims 2 and 3 **characterised in that** the wall segments (33a, 33b) are arranged inclined at an angle relative to the peripheral surface of the hub (31).

6. A radial machine (28) according to one of claims 1 to 5 **characterised in that** the wall segments (33a, 33b) have a straight profile configuration in the radial direction.

7. A radial machine (28) according to one of claims 1 to 5 **characterised in that** the wall segments (33a, 33b) have a curved profile configuration along their radial extent.

8. A radial machine (28) according to one of claims 1 to 7 **characterised in that** the wall segments have an inclination with respect to the peripheral line (LA).

9. A radial machine (28) according to one of claims 1 to 8 **characterised in that** the wall segments (33a, 33b) extend in the radial direction at least to half the height of the rotor blades (32).

10. A radial machine (28) according to one of claims 8 and 9 **characterised in that** the wall segments (33a, 33b) have an arrangement that is inclined in opposite relationship to the curvature of their profile configuration on the peripheral surface of the hub (31).

11. A cleaning apparatus (4) for a combine harvester (1) **characterised by** a fan arrangement (13) having at least one radial machine (28) according to one of claims 1 to 10, that is arranged on at least one drive shaft (27).

12. A combine harvester (1) **characterised by** a cleaning apparatus (4) according to claim 11 having at least one radial machine (28) according to one of claims 1 to 10.

## Revendications

1. Machine radiale (28) comprenant un carter (29) dans lequel un rotor (30) est disposé sur un arbre d'entraînement (27) entouré par endroits d'un moyeu cylindrique creux (31) sur lequel sont disposées des pales de rotor (32) qui s'étendent de façon parallèle axialement à l'arbre d'entraînement (27) en étant réparties dans la direction circonférentielle et qui sont reliées entre elles par des segments de cloisons (33a, 33b) qui s'étendent radialement vers l'extérieur et qui sont disposés verticalement dans la direction circonférentielle du rotor (30) entre les pales de rotor (32), **caractérisée en ce que** des segments de cloisons (33a, 33b) voisins l'un de l'autre et séparés par une pale de rotor (32) présentent un agencement divergent dans la direction tangentielle du rotor (30).

2. Machine radiale (28) selon la revendication 1, **caractérisée en ce que** des segments de cloisons (33a, 33b) voisins l'un de l'autre sont disposés sur la surface latérale du moyeu (31) de manière divergente dans la direction axiale et/ou radiale à partir d'un axe circonférentiel commun (LA).

3. Machine radiale (28) selon la revendication 2, **caractérisée en ce que** des éléments de cloison (33a, 33b) voisins l'un de l'autre sont disposés de manière décalée axialement par rapport à l'axe circonférentiel.

4. Machine radiale (28) selon une des revendications 2 ou 3, **caractérisée en ce que** les segments de cloisons (33a, 33b) sont disposés sur la surface latérale du moyeu (31) de façon à s'étendre radialement vers l'extérieur.

5. Machine radiale (28) selon une des revendications 2 ou 3, **caractérisée en ce que** les segments de cloisons (33a, 33b) sont disposés de manière inclinée selon un angle par rapport à la surface latérale du moyeu (31).

6. Machine radiale (28) selon une des revendications 1 à 5, **caractérisée en ce que**, dans la direction radiale, les segments de cloisons (33a, 33b) présentent un tracé de profil rectiligne.

7. Machine radiale (28) selon une des revendications 1 à 5, **caractérisée en ce que**, le long de leur extension radiale, les segments de cloisons (33a, 33b) présentent un tracé de profil courbe.

8. Machine radiale (28) selon une des revendications 1 à 7, **caractérisée en ce que** les segments de cloisons présentent une inclinaison par rapport à l'axe circonférentiel (LA).

9. Machine radiale (28) selon une des revendications 1 à 8, **caractérisée en ce que**, dans la direction radiale, les segments de cloisons (33a, 33b) s'étendent au moins jusqu'à la moitié de la hauteur des pales de rotor (32).

10. Machine radiale (28) selon une des revendications 8 ou 9, **caractérisée en ce que** les segments de cloisons (33a, 33b) présentent, sur la surface latérale du moyeu (31), un agencement incliné à l'opposé de la courbure de leur tracé de profil.

11. Équipement de nettoyage (4) pour une moissonneuse-batteuse (1), **caractérisé par** un agencement de ventilateur (13) qui comporte au moins une machine radiale (28) selon une des revendications 1 à 10, disposée sur au moins un arbre d'entraînement (27).

12. Moissonneuse-batteuse (1), **caractérisée par** un équipement de nettoyage (4) selon la revendication 11 avec au moins une machine radiale (28) selon une des revendications 1 à 10.
